# FASCICULE DE BREVET EUROPEEN

(11) **EP 1 515 119 B1**
(45) Date de publication et mention de la délivrance du brevet: **02.05.2007**
(21) Numéro de dépôt: 04103520.5
(22) Date de dépôt: 22.07.2004
(51) Int. Cl.: G01C 19/56, G01P 9/00

(54) **Gyromètre micro-usiné à double diapason**
Mikrohergestellte kreisel mit doppelter Stimmgabel
Micro fabricated gyroscope with a double tuning fork

(30) Priorité: 09.09.2003 FR 0310609
(43) Date de publication de la demande: 16.03.2005
(73) Titulaire: Thales, 92200 Neuilly Sur Seine (FR)
(72) Inventeur: CHAUMET, Bernard, 94117, ARCUEIL Cedex (FR); LEVERRIER, Bertrand, 94117, ARCUEIL Cedex (FR); ROUGEOT, Claude, 94117, ARCUEIL Cedex (FR)
(74) Mandataire: Beylot, Jacques

(56) Documents cités:
- US-A- 6 134 961
- US-A1- 2002 046 602

## Description

L'invention concerne les capteurs inertiels destinés à la mesure de vitesses angulaires, ou gyromètres, et plus précisément les gyromètres micro-usinés selon des technologies de gravure, dépôts, dopages, etc, semblables à celles qui sont utilisées dans le domaine des circuits intégrés électroniques.

On connaît déjà de tels capteurs inertiels micro-usinés réalisés sur une plaque de silicium ou de quartz. La structure est plane dans le plan de la plaque de silicium ou de quartz dans laquelle elle est gravée.

Des structures à deux masses vibrantes couplées mécaniquement à la manière d'un diapason ont déjà été réalisées. La structure d'un gyromètre ainsi réalisé comprend typiquement deux masses mobiles excitées en vibration et reliées en diapason, c'est-à-dire que les deux masses sont reliées à une structure de couplage centrale qui transfère l'énergie de vibration de la première masse vers la deuxième et réciproquement.

Les masses sont excitées en vibration dans le plan de la plaque par une structure d'excitation électrique. Cette vibration dans le plan de la plaque s'exerce perpendiculairement à un axe dit « axe sensible » du gyromètre, perpendiculaire à la direction de cette vibration. Lorsque le gyromètre tourne avec une certaine vitesse angulaire autour de son axe sensible, la composition de la vibration forcée avec le vecteur de rotation angulaire engendre, par effet Coriolis, des forces qui mettent les masses mobiles en vibration naturelle perpendiculairement à la vibration d'excitation et à l'axe de rotation ; l'amplitude de cette vibration naturelle est proportionnelle à la vitesse de rotation.

La vibration naturelle est détectée par une structure de détection électrique. Les signaux électriques qui en résultent sont exploités pour en déduire une valeur de la vitesse angulaire autour de l'axe sensible.

Dans certains cas, l'axe sensible est situé dans le plan de la plaque et la structure de détection détecte un mouvement perpendiculaire au plan des masses mobiles. Dans d'autres cas, l'axe sensible du gyromètre est l'axe Oz perpendiculaire au plan de la plaque. Le mouvement d'excitation des masses mobiles est engendré dans une direction Ox du plan alors qu'un mouvement résultant de la force de Coriolis est détecté dans une direction Oy du même plan, perpendiculaire à Ox.

Les masses sont susceptibles de vibrer selon deux modes de vibration orthogonaux, le mode d'excitation aussi désigné mode primaire et le mode de détection aussi désigné mode secondaire.

L'architecture en diapason présente un inconvénient : le mode secondaire n'est pas dynamiquement équilibré. De ce fait, ce mode transmet un couple sur le support du diapason ce qui rend ce mode sensible aux conditions de fixation sur le support et aux perturbations extérieures transmises par le support.

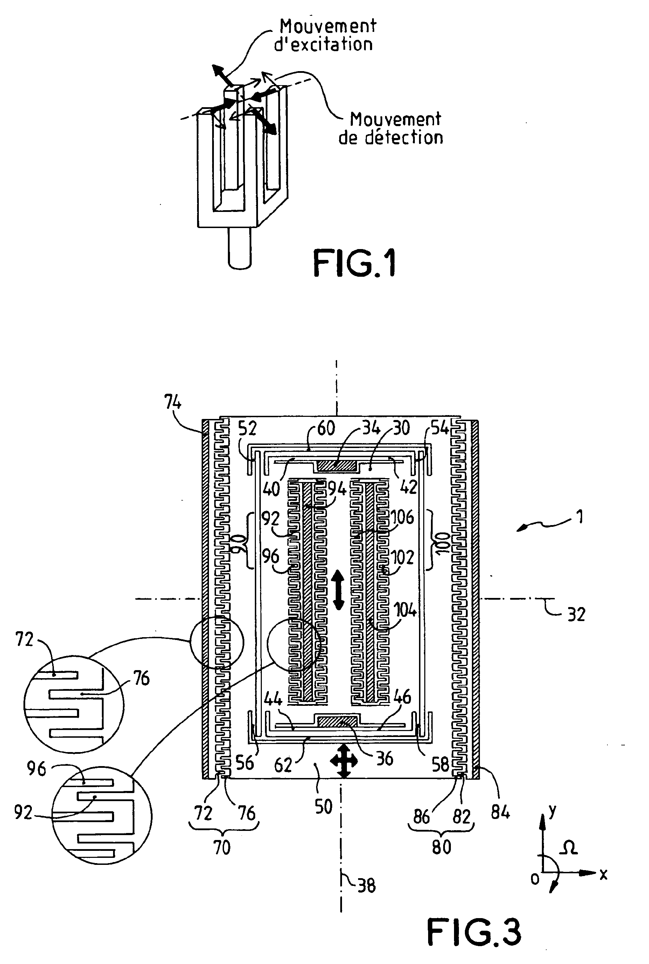

Pour remédier à ce problème, une solution consiste à isoler le mode secondaire en utilisant une structure à double diapason comme représentée figure 1. Dans le mode primaire, les deux diapasons vibrent en opposition, c'est-à-dire que lorsque les deux branches d'un diapason sont « rentrantes », les deux autres sont « sortantes ». Lorsque le gyromètre tourne autour de l'axe du pied du double diapason, les forces de Coriolis engendrées sur chacune des branches ont un couple résultant nul et ne transmettent donc pas d'effort sur le pied du double diapason : le mode secondaire dont le mouvement est indiqué sur la figure 1, est alors peu sensible aux perturbations extérieures et aux conditions de fixation sur le support. Une telle structure est décrite dans le brevet EP 0578 519.

Cette structure à double fourche présente l'inconvénient d'être tridimensionnelle ; elle ne peut être réalisée que par des techniques conventionnelles et non par des techniques collectives de micro-usinage, ce qui rend sa fabrication coûteuse.

Un but de l'invention est de proposer une structure de gyromètre à double diapason de fabrication moins coûteuse. Un autre but est de proposer une structure qui permette également une mesure de rotation avec une très bonne sensibilité, une très bonne linéarité, et des perturbations minimes dues au mouvement d'excitation ou à d'autres effets.

Pour atteindre ce but, l'invention propose un gyromètre à structure vibrante réalisé par micro-usinage dans une plaque mince plane, principalement caractérisé en ce qu'il comporte quatre ensembles mobiles disposés aux sommets d'un rectangle virtuel, chaque ensemble mobile étant couplé à deux ensembles mobiles situés sur des sommets voisins par une structure de couplage pour permettre un transfert d'énergie mécanique de vibration entre eux, chaque ensemble mobile comportant un premier élément mobile inertiel relié à la structure de couplage et destiné à vibrer selon deux directions orthogonales dans le plan de la plaque, à savoir une première direction dite direction d'excitation et une deuxième direction dite direction de détection, un deuxième élément mobile destiné à vibrer selon la direction de détection sans autoriser un mouvement du deuxième élément selon la direction d'excitation et relié d'une part au premier élément mobile et d'autre part à des zones d'ancrage, par des moyens de liaison qui permettent la transmission au deuxième élément mobile du mouvement de vibration du premier élément mobile selon la direction de détection.

Selon une caractéristique de l'invention, le premier élément mobile est un cadre de préférence rectangulaire, entourant le deuxième élément mobile désigné par l'appellation masse de détection.

La masse de détection est avantageusement reliée au cadre par au moins deux premiers bras de flexion étroits et allongés qui présentent une grande résistance à l'allongement dans la direction de détection et une faible raideur dans la direction d'excitation, et la masse de détection est reliée à au moins une zone d'ancrage par au moins deux seconds bras de flexion étroits et allongés qui présentent une grande résistance à l'allongement dans la direction d'excitation et une faible raideur dans la direction de détection.

Les côtés du rectangle sont de préférence respectivement parallèles à Ox et Oy.

Selon une caractéristique de l'invention, le gyromètre comporte un axe de symétrie A3 situé dans le plan de la plaque et selon Oy, tel que les vibrations d'excitation des premiers éléments mobiles de deux ensembles mobiles situés d'un côté de l'axe A3, sont symétriques par rapport aux vibrations d'excitation des premiers éléments mobiles des deux autres ensembles mobiles situés de l'autre côté de cet axe A3.

De même, il comporte un axe de symétrie A4 situé dans le plan de la plaque et selon Ox, tel que les vibrations de détection des seconds éléments mobiles de deux ensembles mobiles situés d'un côté de l'axe A4, sont symétriques par rapport aux vibrations de détection des seconds éléments mobiles des deux autres ensembles mobiles situés de l'autre côté de cet axe A4.

Le rectangle peut être un carré dont les diagonales sont respectivement parallèles à Ox et Oy.

Les ensembles mobiles sont alors disposés de façon à ce que la direction d'excitation soit parallèle à Ox pour deux premiers éléments situés sur les sommets de la diagonale selon Ox et parallèle à Oy pour les deux premiers éléments situés sur les sommets de la diagonale selon Oy ou sont pivotés de 90°.

Selon une caractéristique de l'invention, le gyromètre comporte un axe de symétrie A3 situé dans le plan de la plaque et orienté à ±45° par rapport à Ox, tel que les vibrations d'excitation des premiers éléments mobiles de deux ensembles mobiles situés d'un côté de l'axe A3, sont symétriques par rapport aux vibrations d'excitation des premiers éléments mobiles des deux autres ensembles mobiles situés de l'autre côté de cet axe A3.

De même, il comporte un axe de symétrie A4 situé dans le plan de la plaque et orienté à ±45° par rapport à Ox, tel que les vibrations de détection des seconds éléments mobiles de deux ensembles mobiles situés d'un côté de l'axe A4, sont symétriques par rapport aux vibrations de détecttion des seconds éléments mobiles des deux autres ensembles mobiles situés de l'autre côté de cet axe A4.

Le brevet US 6 134 961 décrit un dispositif de mesure de vitesse angulaire et plus particulièrement, un gyromètre à structure vibrante réalisé par micro-usinage dans une plaque mince plane. Un premier élément mobile qui est relié à la structure de couplage est destiné à vibrer selon une seule direction dite d'excitation. Un second élément mobile vibre dans les deux directions ; il n'est pas relié à des zones d'ancrage, mais est relié au premier élément mobile par des moyens de liaison qui permettent la transmission du mouvement d'excitation du premier élément mobile et qui autorisent le mouvement de détection.

La demande de brevet US 2002/0046602 concerne des gyroscopes micro-usinés comportant deux corps coplanaires liés à un substrat et mobiles dans leur plan respectif par rapport au substrat.

D'autres caractéristiques et avantages de l'invention apparaîtront à la lecture de la description détaillée qui suit, faite à titre d'exemple non limitatif et en référence aux dessins annexés dans lequels :
la figure 1 déjà décrite représente schématiquement une structure tridimensionnelle à double diapason présentant une double fourche,
les figures 2a et 2b représentent schématiquement un premier mode de réalisation d'un gyromètre selon l'invention dont les ensembles mobiles sont disposés aux sommets d'un rectangle, les modes d'excitation et de détection étant respectivement illustrés figures 2a et 2b,
la figure 3 représente schématiquement en détail un ensemble inertiel,
les figures 4, 5 et 6 représentent schématiquement différents éléments de raideur reliés aux ensembles inertiels d'un microgyromètre selon le premier mode de réalisation,
les figures 7a et 7b représentent schématiquement un deuxième mode de réalisation d'un gyromètre selon l'invention dont les ensembles mobiles sont disposés aux sommets d'un carré et présentent une première orientation, et les modes d'excitation et de détection étant respectivement illustrés figures 7a et 7b,
les figures 8a et 8b représentent schématiquement un deuxième mode de réalisation d'un gyromètre selon l'invention dont les ensembles mobiles sont disposés aux sommets d'un carré et présentent une seconde orientation, les modes d'excitation et de détection étant respectivement illustrés figures 8a et 8b,
les figures 9, 10 et 11 représentent schématiquement différents éléments de raideur reliés aux ensembles inertiels d'un microgyromètre selon le deuxième mode de réalisation,
la figure 12 représente schématiquement un exemple d'un gyromètre selon l'invention dont les ensembles mobiles sont disposés aux sommets d'un rectangle.

Une plaque mince plane de silicium est usinée selon l'invention pour faire un gyromètre dont l'axe sensible est perpendiculaire au plan de la plaque.

Le silicium est choisi comme matériau préférentiel, d'une part pour ses propriétés mécaniques et d'autre part pour sa conductivité élevée lorsqu'il est suffisamment dopé par une impureté appropriée (du bore en général pour du silicium de type P). Le silicium conducteur permet de réalise r les fonctions électriques du gyromètre et notamment les fonctions d'excitation et les fonctions de détection ; ces fonctions sont réalisées par des peignes capacitifs interdigités alimentés en courant ou en tension électrique ; les doigts de ces peignes, directement usinés dans le silicium conducteur, servent d'armatures de condensateurs utiles aux fonctions d'excitation et aux fonctions de détection.

L'épaisseur de la plaque de silicium d'origine est par exemple de quelques centaines de micromètres ; la plaque comporte d'une part des zones d'ancrage fixes formée dans cette épaisseur et d'autre part la structure vibrante proprement dite, libre par rapport aux zones d'ancrage et formée sur une épaisseur plus faible, par exemple sur une épaisseur d'une soixantaine de micromètres, isolée du reste de l'épaisseur de la plaque par un intervalle étroit. Sur cette épaisseur d'une soixantaine de micromètres, la plaque de silicium est découpée par micro-usinage selon les motifs de masse de détection, cadre mobile, structure de couplage, bras de flexion, et peignes interdigités désirés.

L'usinage de la structure peut être réalisé en utilisant comme substrat d'origine un substrat de silicium sur isolant, mais d'autres méthodes sont également possibles. Un substrat en silicium sur isolant est constitué d'un substrat de silicium de quelques centaines de micromètres d'épaisseur qui porte sur sa face avant une fine couche d'oxyde de silicium elle-même recouverte d'une couche de silicium monocristallin de quelques dizaines de micromètres d'épaisseur. L'usinage consiste à attaquer le silicium du substrat par sa face avant, selon les motifs de surface désirés, au moyen de techniques de photogravure en usage en microélectronique, jusqu'à atteindre la couche d'oxyde, avec un produit de gravure sélectif qui attaque le silicium sans attaquer significativement l'oxyde. On arrête la gravure lorsque la couche d'oxyde est mise à nu. Cette couche d'oxyde est ensuite enlevée par attaque sélective avec un autre produit de manière à ne conserver que la couche superficielle de silicium monocristallin, sauf à l'endroit des zones d'ancrage où la couche d'oxyde subsiste et forme une liaison solidaire entre le substrat et la couche superficielle de silicium monocristallin. L'usinage par la face avant définit les différents découpages des parties mobiles. Ce sont donc ces motifs de surface, zones d'ancrage et découpages des parties mobiles, que l'on voit sur les figures.

La structure générale du gyromètre est une structure de type double diapason, c'est-à-dire une structure symétrique comportant quatre ensembles inertiels mobiles vibrant en opposition de phase deux à deux, ces ensembles mobiles étant reliés entre eux par une structure de couplage servant à transmettre sans pertes, d'un ensemble à l'autre, les énergies mécaniques de vibration des quatre ensembles. Les ensembles inertiels sont situés aux sommets d'un rectangle virtuel qui peut être un carré. La symétrie de la structure est une symétrie par rapport à un axe A1 et par rapport à un axe A2 situés dans le plan de la plaque, A2 étant perpendiculaire à A1, avec dans les deux cas deux ensembles mobiles de chaque côté de l'axe.

En outre , chaque mode de vibration présente un axe de symétrie : un axe A3 pour le mode d'excitation et un axe A4 pour le mode de détection, situés dans le plan de la plaque, et tel que deux ensembles mobiles situés d'un côté de l'axe A3, respectivement A4 vibrent symétriquement par rapport aux deux autres ensembles mobiles situés de l'autre côté de cet axe. Comme on le verra par la suite, ces axes A3 et A4 peuvent être confondus avec A1 ou A2.

Chaque ensemble inertiel comporte comme premier élément mobile, un cadre inertiel et comme second élément mobile, une masse inertielle mobile centrale entourée par le cadre.

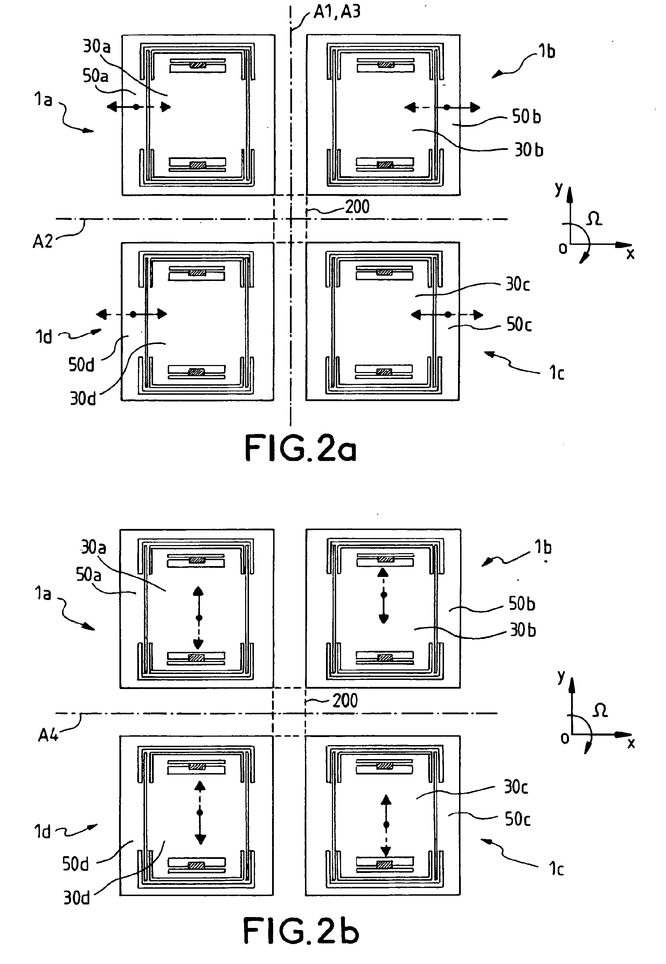

Selon un premier mode de réalisation, les ensembles inertiels 1a, 1b,1c, 1d sont disposés aux sommets d'un rectangle virtuel 200 dont les côtés sont respectivement parallèles à Ox et Oy comme représenté figures 2a et 2b. Les axes A1 et A2 sont indiqués sur ces figures.

Dans la suite les indices a, b, c ou d appliqués aux références seront utilisés lorsqu'il sera utile de préciser la position des éléments référencés par rapport au rectangle virtuel 200.

Les quatre ensembles inertiels présentent une structure identique que l'on repère de manière générale par la référence 1.

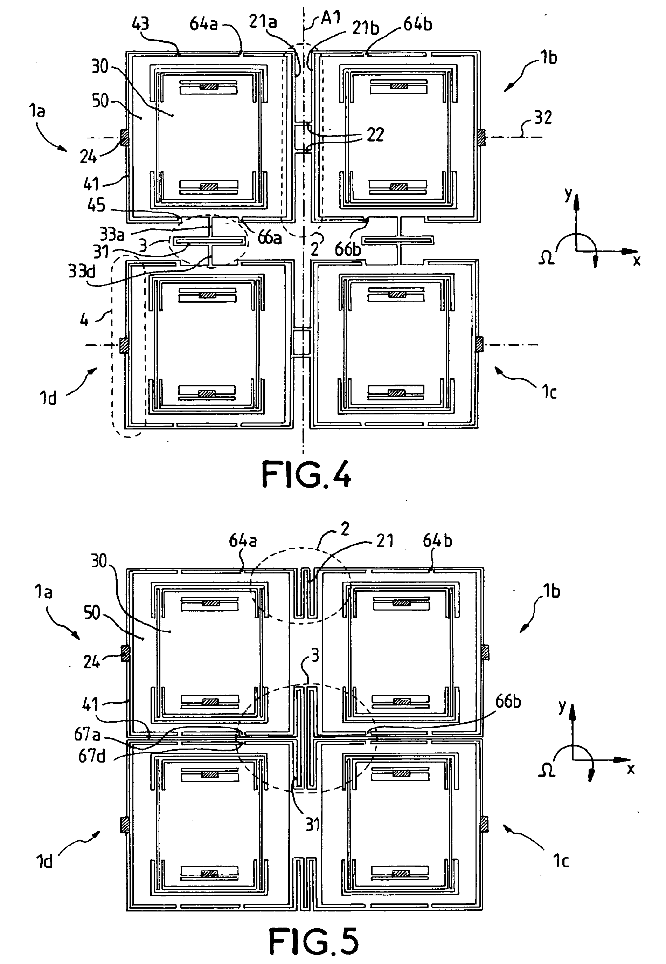

On va à présent décrire en détail un ensemble inertiel 1 en relation avec la figure 3 ; certains éléments ne sont représentés que sur cette figure pour ne pas surcharger les autres.

La masse inertielle mobile aussi désignée masse de détection 30 ne peut se déplacer que selon une direction de détection, par exemple Oy (axe vertical dans le plan de la figure) ; le cadre inertiel 50 peut se déplacer selon l'axe Oy et selon un axe Ox perpendiculaire à Oy et également situé dans le plan de la figure. L'axe sensible du gyromètre est un axe Oz perpendiculaire au plan de la plaque. On excite une vibration du cadre inertiel 50 dans la direction Ox ; lorsque le gyromètre tourne autour de son axe sensible Oz, une vibration du cadre est engendrée selon l'axe Oy. Cette vibration selon Oy est transmise à la masse 30, alors que la vibration selon Ox n'est pas transmise. Comme on le verra, une structure d'excitation de la vibration est associée au cadre 50, et une structure de détection de vibration est associée à la masse inertielle de détection 30. La structure de couplage (non représentée sur la figure 3) transmet l'énergie mécanique de vibration de l'ensemble inertiel mobile d'un côté à l'autre de l'axe A3 et de l'axe A4 aussi bien pour les vibrations parallèles à Ox que pour les vibrations parallèles à Oy car cette structure de couplage est reliée directement aux cadres des quatres ensembles inertiels 1a, 1b, 1c, 1d qui peuvent vibrer à la fois selon des directions parallèles à Ox et à Oy.

Finalement qu'il s'agisse du mode d'excitation ou du mode de détection, chaque cadre 50 est destiné à vibrer en opposition de phase avec les cadres 50 des ensembles situés sur les deux sommets voisins du rectangle comme illustré figures 2a pour le mode d'excitation. En mode de détection, chaque masse de détection 30 est destinée à vibrer en opposition de phase avec les masses 30 des ensembles situés sur les sommets voisins du rectangle, comme illustré figure 2b.

Concernant les vibrations elles-mêmes, l'axe de symétrie A3 (relatif au mode d'excitation) représenté figure 2a est confondu avec A1et l'axe de symétrie A4 (relatif au mode de détection) représenté figure 2b est confondu avec A2. De plus l'axe des vibrations est perpendiculaire aux axes A3 ou A4. Ainsi la résultante des efforts transmis sur le support est nulle, ce qui procure une bonne isolation du mode secondaire.

Comme on le voit sur la figure 3, la masse de détection 30 est reliée à des zones d'ancrage fixes par au moins deux bras de flexion conçus pour autoriser un déplacement de la masse selon Oy mais pour empêcher tout mouvement significatif de la masse dans la direction Ox. Ces bras sont de préférence situés de part et d'autre d'un axe de symétrie 32 de la masse, parallèle à Ox. Il y a alors deux zones d'ancrage 34 et 36 situées de part et d'autre de la masse de détection, symétriques par rapport à cet axe de symétrie 32. De plus, ces zones sont de préférence situées sur un autre axe de symétrie 38 de la masse, axe qui est parallèle à Oy. Les bras de flexion qui relient la masse 30 aux zones 34 et 36 sont des bras allongés dans la direction Ox, de manière à présenter une grande raideur (grande résistance à l'allongement) dans cette direction. Ils sont par ailleurs très étroits, comparativement à leur longueur, pour présenter une faible raideur dans la direction Oy perpendiculaire à Ox ; cette faible raideur autorise un déplacement de la masse selon Oy.

Pour obtenir à la fois une grande raideur ou résistance à l'allongement dans une direction et une faible raideur dans la direction perpendiculaire dans le même plan, il suffit que les bras aient une longueur globale d'au moins 5 fois leur largeur. Il s'agit là de raideurs relatives, la raideur absolue dépendant bien entendu des dimensions absolues des bras.

Il y a de préférence quatre bras de flexion plutôt que deux, la masse étant reliée à la zone d'ancrage 34 par deux bras 40 et 42 dans le prolongement l'un de l'autre de part et d'autre de la zone 34 ; la masse est reliée par ailleurs à la deuxième zone d'ancrage 36 par deux bras 44 et 46 dans le prolongement l'un de l'autre de part et d'autre de la zone 36.

En pratique, comme on le voit sur la figure 3, pour gagner en encombrement dans la direction Oy sans réduire significativement la dimension de la masse dans cette direction, on effectue une découpe dans la masse autour de la zone d'ancrage ; pour maximiser la flexibilité des bras de flexion dans la direction Oy en augmentant le rapport entre la longueur et la largeur de ces bras, on relie chaque bras d'un côté à proximité d'un coin d'extrémité de la masse (la masse a une forme en principe généralement rectangulaire) et de l'autre à la zone d'ancrage située sur l'axe de symétrie 38. On notera qu'on pourrait aussi envisager de donner aux bras 40, 42, 44, 46 une forme repliée avec deux branches allongées dans la direction Oy, les bras étant alors attachés à la masse plus près de la zone d'ancrage centrale. On notera aussi que, plutôt qu'une zone d'ancrage centrale située au milieu d'un côté de la masse de détection, on pourrait avoir deux zones d'ancrage situées plutôt à proximité des coins d'extrémité de la masse de part et d'autre de l'axe 38.

Le cadre mobile 50 entoure de préférence complètement la masse 30. La masse 30 est reliée au cadre 50 par au moins deux bras de flexion qui ont pour particularité de présenter une très grande raideur (très grande résistance à l'allongement) dans la direction Oy et une faible raideur dans la direction Ox. Ces bras sont allongés dans la direction Oy et ont une largeur faible devant leur longueur, afin de présenter cette différence de raideurs.

Il y a de préférence quatre bras de flexion de ce type entre la masse 30 et le cadre 50, les bras étant situés en pratique chacun à un coi n de la masse de détection si elle est de forme généralement rectangulaire. Ils sont disposés symétriquement d'une part par rapport à l'axe de symétrie 32 de la masse (axe parallèle à Ox) et d'autre part par rapport à l'axe de symétrie 38 (parallèle à Oy).

Ces bras sont désignés par les références 52, 54, 56, 58. Ils ont de préférence une forme repliée en U pour diviser par deux leur dimension longitudinale sans réduire significativement leur longueur utile donc sans diminuer significativement le rapport élevé entre leur raideur selon Oy et leur raideur selon Ox. Les deux branches repliées du U sont allongées parallèlement à Oy et sont reliées entre elles par un court élément de liaison. Les bras 52 à 58 pourraient cependant ne pas être repliés et s'étendre en totalité selon la direction Oy entre le cadre et la masse. Le repliement permet de gagner de la place sans modifier significativement les caractéristiques mécaniques désirées.

Si les bras sont repliés comme sur la figure 3, il est préférable de relier par ailleurs l'élément court de liaison (qui relie les deux branches du U) d'un premier bras 52 à l'élément court correspondant du bras 54 qui est symétrique du bras 52 par rapport à l'axe 38. Une traverse 60 est prévue à cet effet, parallèle à Ox, pour relier le fond du U du bras de liaison 52 au fond du U du bras de flexion 54, les bras 52 et 54 étant symétriques par rapport à l'axe 38. Une traverse similaire 62, symétrique de la traverse 60 par rapport à l'axe 32, relie les éléments symétriques 56 et 58. Ces traverses 60 et 62, parallèles à Ox, renforcent la symétrie de transmission d'un mouvement selon Oy imposé par le cadre mobile 50 à la masse 30. Elles ne sont pas présentes si les bras 52, 54, 56, 58 n'ont pas une forme repliée car dans ce cas les extrémités des bras 52 et 54 seraient déjà reliées rigidement par le cadre 50 lui-même.

Comme on le voit sur la figure 3, la forme repliée en U allongé des bras de flexion entre le cadre mobile 50 et la masse de détection 30 est obtenue par des découpes dans le cadre mobile et dans la masse de détection, mais de manière générale, les bras de flexion partent à peu près d'un coin intérieur du cadre vers un coin en vis-à-vis de la masse même si le point de fixation effectif du bras sur le cadre ou sur la masse ne part pas exactement de ce coin. On peut considérer que la masse est suspendue globalement par ses quatre coins au cadre mobile.

Le cadre 50 est excité en vibration selon Ox par une première structure en peigne interdigité 70 qui comporte un demi-peigne fixe 72, attaché à une zone d'ancrage 74 et un demi-peigne mobile 76 constitué le long d'un premier côté (parallèle à Oy) du cadre 50. Les dents ou doigts du demi-peigne fixe 72, en silicium conducteur usiné en même temps que les autres éléments du gyromètre, constituent la première armature d'une capacité et les dents ou doigts du demi-peigne mobile 76, également en silicium conducteur, constituent la deuxième armature de cette capacité. Classiquement, la structure en peigne agit comme excitateur du mouvement de la partie mobile grâce aux forces d'attraction qui s'exercent entre les doigts en regard lorsqu'une tension est appliquée entre les demi-peignes. La tension d'excitation est alternative pour engendrer un mouvement de vibration, et la fréquence de cette tension est choisie très proche de ou égale à la fréquence de résonance mécanique de la structure. La tension d'excitation est appliquée entre la zone d'ancrage 74 et l'une et/ou l'autre des zones d'ancrage 34 et 36. Le demi-peigne fixe 72 est en contact électrique direct (par le corps du silicium conducteur) avec la zone d'ancrage 74 ; le demi-peigne mobile 76 est en contact avec les zones d'ancrage 34 et 36 par l'intermédiaire des bras de flexion 52 à 58, du corps de la masse de détection, des bras de flexion 40 à 46, et du cadre 50, de sorte qu'en appliquant une tension entre la zone d'ancrage 74 et les zones d'ancrage 34 ou 36 on applique bien une tension entre la partie fixe et la partie mobile du peigne 70.

Le mouvement d'excitation engendré sur le cadre 50 est selon la direction Ox, les peignes agissant par modification de la surface en recouvrement mutuel des doigts intercalés.

Le microgyromètre comporte de préférence une autre structure à peignes interdigités associée au cadre, symétrique de la structure 70 par rapport à l'axe 38. Elle comporte un demi-peigne fixe 82 attaché à une zone d'ancrage 84, et un demi-peigne mobile 86 usiné le long d'un côté du cadre 50. Cette structure peut servir de détecteur du mouvement du cadre selon Ox. Elle est utile pour l'asservissement du mouvement excité par le peigne 70 ; l'asservissement est en général utile pour ajuster la fréquence d'excitation par rapport à la fréquence de résonance de la structure. Les tensions détectées par la structure 80 apparaissent entre la zone d'ancrage 84 et les zones d'ancrage 34 et 36.

Au moins un peigne interdigité est associé à la masse de détection 30 pour détecter le mouvement de la masse de détection dans la direction Oy. L'orientation de ces peignes dépend du principe sur lequel repose la détection : si la détection repose sur une mesure des variations de surface en recouvrement mutuel des doigts des demi-peignes fixe et mobile, le peigne de détection des mouvements selon Oy est disposé perpendiculairement au peigne d'excitation 70 (qui repose aussi sur des variations de surface en recouvrement). Mais si la détection repose sur une mesure des variations d'espacement entre les doigts du demi-peigne fixe et du demi-peigne mobile, le peigne de détection est disposé parallèlement au peigne d'excitation. La détection par la variation de l'espacement entre doigts est préférée car elle est plus sensible. L'interdigitation des peignes est alors dissymétrique au repos, les doigts d'un demi-peigne n'étant pas exactement au milieu de l'intervalle entre deux doigts de l'autre demi-peigne, alors qu'un peigne fonctionnant (comme le peigne d'excitation) sur la base de variations de surfaces en recouvrement a les doigts d'un demi-peigne au milieu de l'intervalle entre les doigts de l'autre demi-peigne.

C'est le cas sur la figure 3 : les peignes de détection sont disposés avec la même orientation générale que les peignes 70 et 80, bien qu'ils soient associés à un mouvement selon Oy alors que les peignes 70 et 80 sont associés à un mouvement (excitation ou détection) selon Ox.

Dans l'exemple de la figure 3, la masse de détection est associée à deux peignes interdigités identiques 90 et 100 disposés parallèlement à l'axe de symétrie 38 et de part et d'autre de cet axe. Ces peignes jouent tous les deux le même rôle de détecteur du mouvement de la masse selon Oy , et on pourrait en variante se contenter d'un seul peigne placé au centre de la masse le long de l'axe 38.

Le peigne 90 comporte un demi-peigne fixe 92 attaché à une zone d'ancrage 94 et un demi-peigne mobile 96 faisant partie de la masse de détection elle-même. La masse de détection comporte une découpe pour laisser la place au peigne fixe 92 et à la zone d'ancrage 94, et les bords de cette découpe sont découpés en forme de doigts pour constituer le demi-peigne mobile 96 dans lequel viennent s'intercaler les doigts du demi-peigne fixe. Dans l'exemple représenté, le peigne 90 est double, c'est-à-dire que deux côtés de la découpe de la masse 30 sont pourvus de doigts, et le demi-peigne fixe 92 comporte des doigts de part et d'autre de la zone d'ancrage 94.

La structure interdigitée 100 est rigoureusement symétrique de la structure 90 et est formée dans une autre découpe de la masse de détection 30. Elle comporte un demi-peigne fixe 102, une zone d'ancrage 104, et un demi-peigne mobile 106.

Pour la détection du mouvement selon Oy, un circuit électronique associé à cette structure détecte la modulation en amplitude des tensions électriques présentes entre la zone d'ancrage 94 et les zones d'ancrage 34 et 36, et/ou entre la zone 104 et les zones 34 et 36. Cette modulation n'est due qu'à un déplacement de la masse de détection selon l'axe Oy puisque la masse ne peut se déplacer que selon cet axe.

Dans le cas d'une architecture de gyromètre classique à 3 dimensions, le socle en forme de croix visible sur la figure 1, assure la fonction de couplage entre les différentes branches du double diapason.

Dans le cas d'une architecture à deux dimensions, la structure de couplage est constituée par deux paires d'éléments de raideur qui assurent le couplage à la fois pour le mode d'excitation et pour le mode de détection et dont plusieurs exemples sont représentés figures 4, 5 et 6 : une paire de premiers éléments de raideur 2 déformables selon une direction parallèle à Ox et une direction parallèle à Oy et permettant de relier parallèlement à Ox, deux ensembles mobiles 1a et 1b (respectivement 1c et 1d) situés sur des sommets voisins du rectangle et une paire de seconds éléments de raideur 3 déformables selon une direction parallèle à Ox et une direction parallèle à Oy et permettant de relier parallèlement à Oy deux ensembles mobiles 1a et 1d (respectivement 1b et 1c) situés sur des sommets voisins du rectangle.

Ces éléments de raideur 2 et 3 peuvent prendre plusieurs formes.

On va décrire le premier élément de raideur 2 reliant les ensembles 1 a et 1 b ; on pourrait tout aussi bien le décrire en remplaçant les indices a et b respectivement par d et c.

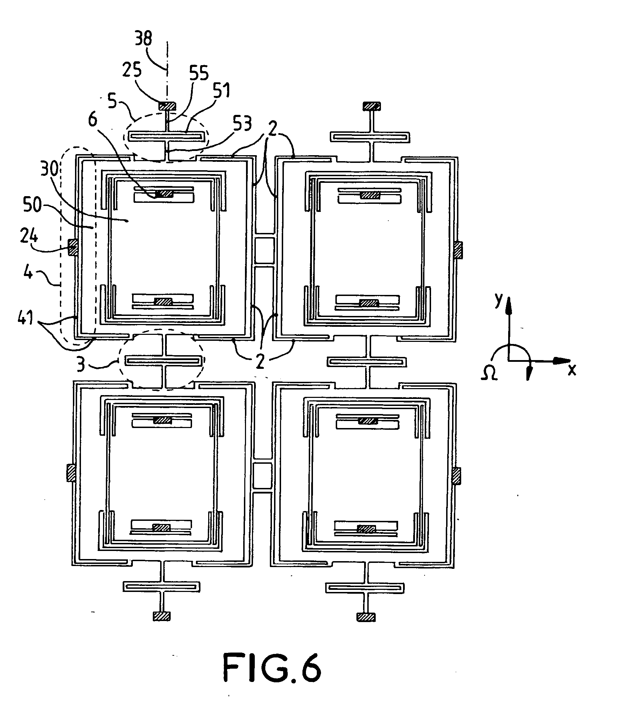

Sur les figures 4 et 6, le premier élément de raideur 2 comprend par exemple deux bras 21a et 21b en forme de U qui entourent le côté intérieur parallèle à Oy de l'ensemble mobile 1a, respectivement 1b et qui sont reliés à l'ensemble mobile par des bras de liaison courts 64a, 64b, 66a, 66b, situés aux extrémités du U, les bras 64 étant symétriques des bras 66 par rapport à l'axe de symétrie 32. Ces bras courts constituent des liaisons pratiquement rigides à travers lesquelles l'énergie de vibration selon Ox et Oy du cadre 50a (et de la masse de détection 30a) peut passer vers la structure de couplage et donc vers le cadre 50b (et la masse de détection 30b). Il comprend également une double barre de liaison 22 pouvant être considérée comme rigide qui relie les deux bras 21a et 21b entre eux. La double barre de liaison 22 relie le côté du premier bras 21a au côté adjacent du deuxième bras 21b. Elle est perpendiculaire à l'axe A1 et centrée sur cet axe. La double barre de liaison courte 22 peut être simple ou renforcée par une autre barre de liaison courte située au milieu de la double barre 22 et également centrée sur l'axe A1. L'écartement plus ou moins grand de chacune des barres constituant la double barre de liaison 22 permet un certain ajustement de l'écart entre les fréquences utiles d'excitation et de détection du microgyromètre.

Selon une autre configuration représentée figure 5, le premier élément de raideur 2 comprend un seul bras 21 décrivant au moins un créneau situé entre les deux ensembles mobiles 1a et 1b, de préférence vers l'extérieur ; le bras 21 est relié à chaque ensemble mobile par de courts bras de liaison 64a, 64b, situés aux extrémités du bras 21.

On va décrire le deuxième élément de raideur 3 en relation avec les ensembles 1a et 1d ; on pourrait tout aussi bien le décrire en remplaçant les indices a et d respectivement par b et c.

Sur l'exemple de la figure 4, le deuxième élément de raideur 3 comprend un bras 31 en forme de rectangle aplati selon Ox, situé entre les deux ensembles mobiles 1a et 1d, et de part et d'autre de ce rectangle aplati, deux barres de liaison 33a et 33d déformables selon une direction parallèle à Oy et reliant chacune le milieu d'une longueur de ce rectangle aplati 31, au milieu du côté de l'ensemble mobile 1a respectivement 1d.

Selon une autre configuration représentée figure 5, le deuxième élément de raideur 3 comprend un bras 31 en forme de T couché de préférence, la barre du T étant située vers le centre des quatre ensembles 1a, 1b, 1c et 1d pour limiter l'espacement entre les deux ensembles mobiles 1a et 1d, le bras se prolongeant par deux courts bras de liaison rigides 67a, 67d reliant chacun la base du T 31 à l'un des deux ensembles mobiles 1a, 1d.

Ces premiers et seconds éléments de raideur 2 et 3 ne sont pas reliés à des zones d'ancrage fixes.

Chaque cadre 50 est de préférence relié à des zones d'ancrage fixes par deux éléments de raideur : un troisième élément de raideur 4 permettant de relier le cadre 50 à une zone d'ancrage 24 située sur l'extérieur de l'ensemble mobile parallèlement à Oy sur l'axe 32, représenté figures 4, 5 et 6 et un quatrième élément de raideur 5 permettant de relier le cadre à une zone d'ancrage 25 située sur l'extérieur de l'ensemble mobile parallèlement à Ox situé sur l'axe 38, représenté figure 6.

Le troisième élément de raideur 4 comprend un bras 41 en forme de U relié à la base du U à la zone d'ancrage 24 et qui entoure le côté extérieur parallèle à Oy de l'ensemble mobile ; il est relié à l'ensemble mobile par de courts bras rigides 43, 45 située aux extrémités du U. Une extrémité de ce troisième élément 4 peut éventuellement rejoindre une extrémité du premier élément de raideur 2 situé vers l'extérieur comme illustré figures 4 et 5, et éventuellement rejoindre une extrémité du deuxième élément de raideur 3 comme illustré figure 5.

Le quatrième élément de raideur 5 représenté figure 6 comprend un bras 51 en forme de rectangle aplati parallèlement à Ox et, de part et d'autre de ce rectangle aplati, deux barres de liaison rigides 53, 55 reliant l'une, le milieu d'une longueur de ce rectangle aplati 51 à la zone d'ancrage 25, l'autre le milieu de l'autre longueur du rectangle aplati au cadre 50.

Ces troisièmes et quatrièmes éléments de raideur 4 et 5, associés aux éléments de raideur 2 et 3 sont dimensionnés de façon à ce que le couple de raideur agissant sur les cadres 50 et produit par les vibrations d'excitation et/ou de détection soit minimal, voire nul.

Dans les cas précédents, les quatre ensembles mobiles étaient disposés aux sommets d'un rectangle virtuel.

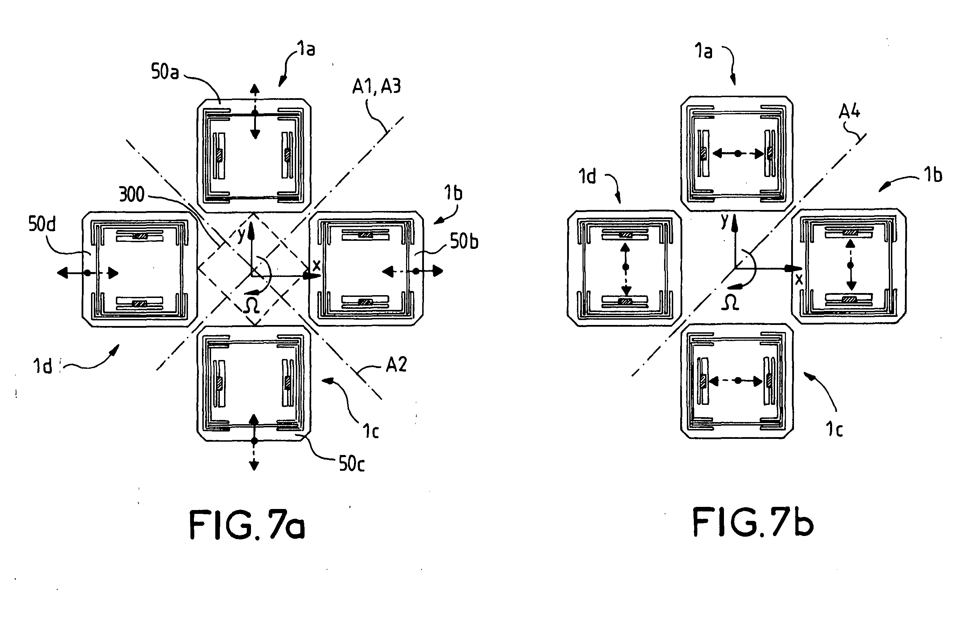

Selon un autre mode de configuration, ils sont disposés au sommet d'un carré virtuel 300 dont les diagonales sont respectivement parallèles à Ox et Oy, comme on le voit sur les figures 7 à 11.

Chaque ensemble mobile comporte une masse inertielle de détection 30 et un cadre 50 comme décrit en relation avec la figure 3.

Plusieurs configurations sont possibles.

Comme illustré figures 7a et 7b, les deux ensembles virtuels 1d et 1b situés aux sommets de la diagonale selon Ox peuvent être orientés comme précédemment c'est-à-dire que la direction d'excitation est parallèle à Ox et la direction de détection parallèle à Oy ; alors que les deux autres ensembles mobiles 1a et 1c situés aux sommets de la diagonale selon Oy ont pivoté de 90° par rapport à l'orientation précédente, c'est-à-dire que la direction d'excitation est parallèle à Oy et la direction de détection parallèle à Ox. Cela signifie que les ensembles mobiles sont disposés de façon à ce que la direction d'excitation soit parallèle à Ox pour les deux premiers éléments 50d et 50b des ensembles situés sur les sommets de la diagonale selon Ox et de façon à ce que la direction d'excitation soit parallèle à Oy pour les deux premiers éléments 50a et 50c des ensembles situés sur les sommets de la diagonale selon Oy.

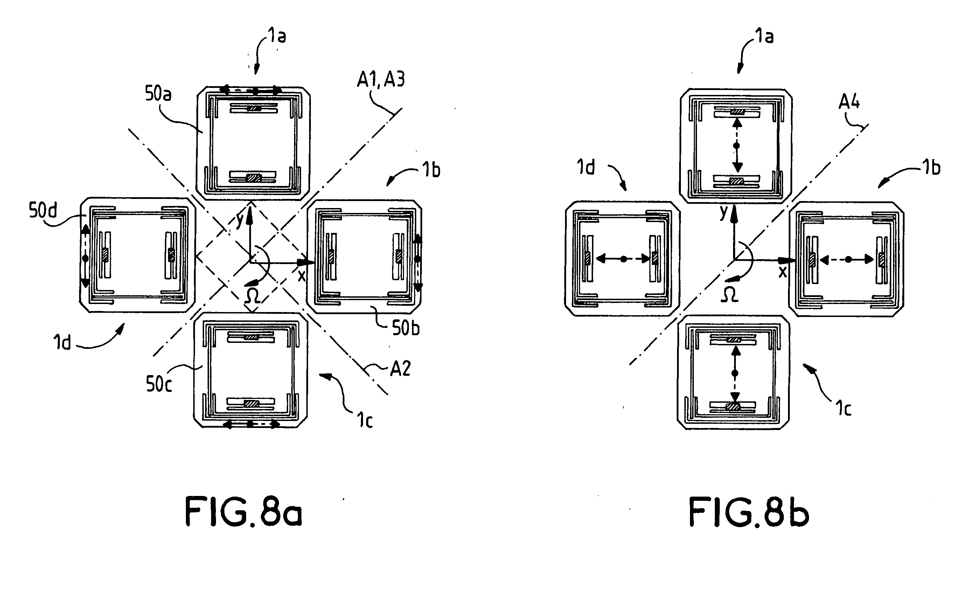

Une autre configuration possible est représentée figures 8a et 8b. Les deux ensembles virtuels 1d et 1b situés aux sommets de la diagonale selon Ox sont orientés de façon que la direction d'excitation soit parallèle à Oy et la direction de détection parallèle à Ox ; alors que les deux autres ensembles mobiles 1a et 1c situés aux sommets de la diagonale selon Oy sont orientés de façon que la direction d'excitation soit parallèle à Ox et la direction de détection parallèle à Oy. Cela signifie que les ensembles mobiles sont disposés de façon à ce que la direction d'excitation soit parallèle à Oy pour les deux premiers éléments 50d et 50b des ensembles situés sur les sommets de la diagonale selon Ox et de façon à ce que la direction d'excitation soit parallèle à Ox pour les deux premiers éléments 50a et 50c des ensembles situés sur les sommets de la diagonale selon Oy.

Dans l'une ou l'autre de ces configurations, les cadres des deux ensembles 1a et 1c situés aux sommets de la diagonale selon Ox vibrent en opposition de phase entre eux, et les cadres des deux autres ensembles mobiles 1b et 1d situés aux sommets de la diagonale selon Oy vibrent également en opposition de phase entre eux.

Les axes A1, A2, A3 et A4 sont orientés à ±45° par rapport à l'axe Ox. Seule l'orientation +45° est représentée sur les figures. De plus, l'axe A3 est également axe de symétrie pour les vibrations de détection ; de même, l'axe A4 est également axe de symétrie pour les vibrations d'excitation. Selon ce mode de réalisation, l'axe des vibrations n'est pas perpendiculaire aux axes A3 ou A4, mais orienté à 45° par rapport à ces axes.

La structure de couplage peut prendre plusieurs formes pour l'une ou l'autre de ces configurations. Elle comprend de préférence un seul élément de raideur 6 situé au centre de la structure comportant les quatre ensembles mobiles 1a, 1b,1c et 1d. Il comprend un seul bras 61 et quatre barres de liaison rigides 63a, 63b, 63c et 63d reliant chacune le bras 61 à l'un des quatre ensembles mobiles 1a, 1b,1c et 1d.

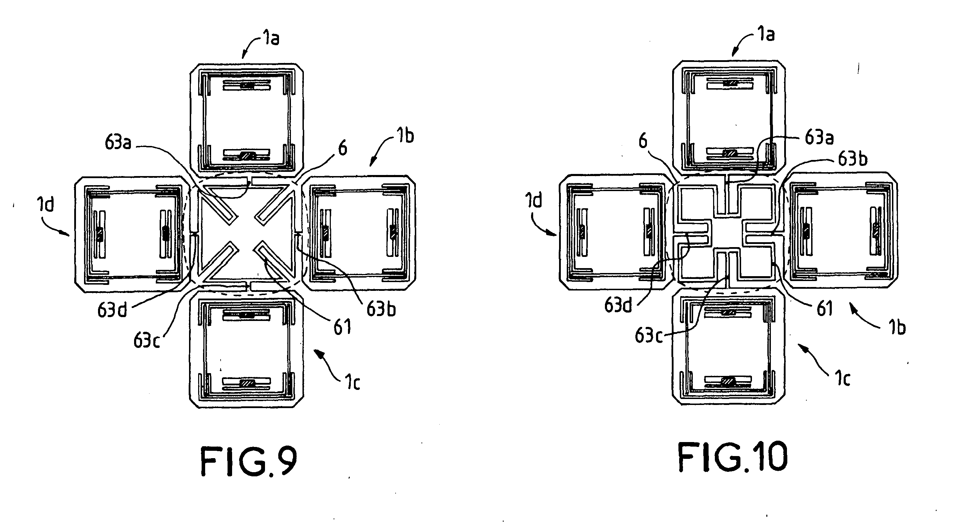

Le bras 61 peut être en forme de croix de Malte comme dans l'exemple de la figure 9 ou en forme de trèfle à quatre feuilles comme dans celui de la figure 10.

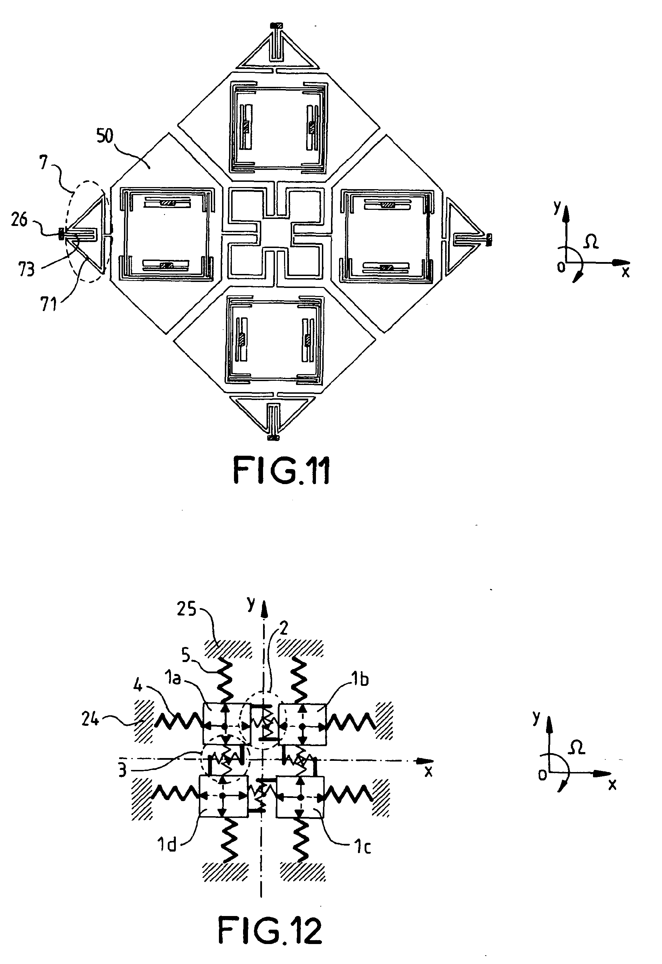

Comme représenté figure 11, chaque cadre 50 est de préférence relié par un sixième élément de raideur 7, à une zone d'ancrage fixe 26 située vers l'extérieur de la structure comportant les quatre ensembles mobiles. Le sixième élément de raideur 7 comporte par exemple un seul bras 71 en forme de triangle isocèle dont la base est parallèle au côté de l'ensemble mobile et dont le sommet opposé à cette base pointe vers la zone d'ancrage 26. Ce sommet présente un créneau dirigé vers l'intérieur du triangle. Ce bras 71 est relié à la zone d'ancrage au niveau du créneau par une barre de liaison rigide 73.

Ces sixièmes éléments de raideur 7, associés à l'élément de raideur 6 sont dimensionnés de façon à ce que le couple de raideur agissant sur les cadres 50 et produit par les vibrations d'excitation et/ou de détection soit minimal, voire nul.

Un exemple d'une configuration selon un rectangle virtuel, est représenté figure 12. Le premier élément mobile inertiel et le deuxième élément mobile sont confondus dans l'ensemble mobile 1 relié à la structure de couplage et à des zones d'ancrage. La structure de couplage comporte des éléments de raideur 2 et 3 déformables en x et en y. Chaque ensemble mobile 1 est relié à une zone d'ancrage 24 par un élément de raideur 4 déformable en x et à une zone d'ancrage 25 par un élément de raideur 5 déformable en y.

## Revendications

1. Gyromètre à structure vibrante réalisé par micro-usinage dans une plaque mince plane, comportant quatre ensembles mobiles (1a, 1b, 1c, 1d) disposés aux sommets d'un rectangle virtuel, chaque ensemble mobile étant couplé à deux ensembles mobiles situés sur des sommets voisins par une structure de couplage pour permettre un transfert d'énergie mécanique de vibration entre eux, chaque ensemble mobile comportant un premier élément mobile inertiel (50) destiné à vibrer selon deux directions orthogonales dans le plan de la plaque, à savoir une première direction dite direction d'excitation et une deuxième direction dite direction de détection, un deuxième élément mobile (30) destiné à vibrer selon la direction de détection sans autoriser un mouvement du deuxième élément selon la direction d'excitation et relié d'une part au premier élément mobile (50) et d'autre part à des zones d'ancrage ( 34, 36), par des moyens de liaison (40, 42, 44, 46, 52, 54, 56, 58) qui permettent la transmission au deuxième élément mobile du mouvement de vibration du premier élément mobile selon la direction de détection
caractérisé en ce les premiers éléments mobiles inertiels sont reliés à la structure de couplage.

2. Gyromètre selon la revendication précédente, **caractérisé en ce que** le premier élément mobile (50) est un cadre entourant le deuxième élément mobile (30) désigné par l'appellation masse de détection.

3. Gyromètre selon la revendication précédente, **caractérisé en ce que** le cadre (50) est rectangulaire.

4. Gyromètre selon l'une des revendications 2 ou 3, **caractérisé en ce que** la masse de détection (30) est reliée au cadre (50) par au moins deux premiers bras de flexion (52, 54, 56, 58) étroits et allongés qui présentent une grande résistance à l'allongement dans la direction de détection et une faible raideur dans la direction d'excitation, et la masse de détection (30) est reliée à au moins une zone d'ancrage par au moins deux seconds bras de flexion étroits et allongés (40, 42, 44, 46) qui présentent une grande résistance à l'allongement dans la direction d'excitation et une faible raideur dans la direction de détection.

5. Gyromètre selon la revendication précédente, **caractérisé en ce que** chaque premier bras de flexion est replié en U, et présente deux parties allongées s'étendant dans la direction de détection, ces deux parties étant reliées par un élément de liaison court.

6. Gyromètre selon la revendication précédente, **caractérisé en ce que** l'élément de liaison court d'un des premiers bras de flexion (52) est relié à l'élément de liaison semblable d'un autre premier bras (54), par une traverse (60) allongée dans la direction d'excitation.

7. Gyromètre selon l'une des revendications précédentes, **caractérisé en ce que** chaque ensemble mobile est relié à au moins une zone d'ancrage située vers l'extérieur de la structure vibrante comportant les quatre ensembles mobiles, par l'intermédiaire d'au moins un élément de raideur.

8. Gyromètre selon l'une des revendications précédentes, **caractérisé en ce que** les côtés du rectangle sont respectivement parallèles à Ox et Oy.

9. Gyromètre selon la revendication précédente, **caractérisé en ce que** la direction d'excitation de chaque premier élément mobile (50) est parallèle à Ox.

10. Gyromètre selon la revendication précédente, **caractérisé en ce que** chaque premier élément mobile est destiné à vibrer en opposition de phase avec les premiers éléments situés sur les sommets voisins du rectangle virtuel (200) et **en ce que** chaque deuxième élément mobile est destiné à vibrer en opposition de phase avec les deuxièmes éléments situés sur les sommets voisins du rectangle virtuel (200).

11. Gyromètre selon l'une des revendications 8 à 10, **caractérisé en ce qu'**il comporte un axe de symétrie A3 situé dans le plan de la plaque et selon Oy, tel que les vibrations d'excitation des premiers éléments mobiles (50) de deux ensembles mobiles situés d'un côté de l'axe A3, sont symétriques par rapport aux vibrations d'excitation des premiers éléments mobiles (50) des deux autres ensembles mobiles situés de l'autre côté de cet axe A3.

12. Gyromètre selon l'une des revendications 8 à 11, **caractérisé en qu'**il comporte un axe de symétrie A4 situé dans le plan de la plaque et selon Ox, tel que les vibrations de détection des seconds éléments mobiles (50) de deux ensembles mobiles situés d'un côté de l'axe A4, sont symétriques par rapport aux vibrations de détection des seconds éléments mobiles (50) des deux autres ensembles mobiles situés de l'autre côté de cet axe A4.

13. Gyromètre selon l'une des revendication 8 à 12, **caractérisé en ce qu'**il comporte une paire de premiers éléments de raideur (2) déformables selon des directions respectivement parallèles à Ox et Oy, chaque premier élément de raideur (2) reliant parallèlement à Ox, deux ensembles mobiles (1a et 1b, ou 1c et1d) situés sur des sommets voisins du rectangle virtuel.

14. Gyromètre selon la revendication précédente, **caractérisé en ce que** le premier élément de raideur (2) comprend deux bras (21) en forme de U, chaque bras (21) entourant le côté intérieur parallèle à Oy d'un ensemble mobile, étant relié à l'ensemble mobile par de courtes liaisons rigides (64, 66) situées aux extrémités du U et étant relié à l'autre bras (21) par au moins une barre de liaison (22).

15. Gyromètre selon la revendication 13, **caractérisé en ce que** le premier élément de raideur (2) comprend un bras (21) décrivant au moins un créneau, chaque extrémité du bras (21) étant reliée à l'un des deux ensembles mobiles par une courte liaison rigide (64).

16. Gyromètre selon l'une des revendications 8 à 15, **caractérisé en ce qu'**il comporte une paire de seconds éléments de raideur (3) déformables selon des directions respectivement parallèles à Ox et Oy, chaque second élément de raideur reliant parallèlement à Oy deux ensembles mobiles (1a et 1d, ou 1b et 1c) situés sur des sommets voisins du rectangle virtuel.

17. Gyromètre selon la revendication précédente, **caractérisé en ce que** le second élément de raideur (3) comprend un bras (31) en forme de rectangle aplati selon Ox et déformable selon une direction parallèle à Oy, situé entre les deux ensembles mobiles et, de part et d'autre du rectangle aplati (31), deux liaisons (33) déformables selon une direction parallèle à Ox et reliant le milieu de chaque longueur du rectangle aplati (31), au milieu de l'un des deux ensembles mobiles.

18. Gyromètre selon la revendication 16, **caractérisé en ce que** le second élément de raideur (3) comprend un bras (31) en forme de T couché et, deux courtes liaisons rigides (67) reliant chacune la base du T à l'un des deux ensembles mobiles.

19. Gyromètre selon l'une des revendications 8 à 18, **caractérisé en ce que** chaque ensemble mobile (1) est relié à une première zone d'ancrage extérieure (24) par un troisième élément de raideur (4) déformable selon des directions respectivement parallèles à Ox et Oy comprenant un bras (41) en forme de U qui entoure le côté extérieur parallèle à Oy de chaque ensemble mobile et qui est relié à l'ensemble mobile par de courtes liaisons rigides (43, 45) situées aux extrémités du U.

20. Gyromètre selon l'une des revendications 8 à 19, **caractérisé en ce que** chaque ensemble mobile est relié à une deuxième zone d'ancrage extérieure (25) par un quatrième élément de raideur (5) déformable selon des directions respectivement parallèles à Ox et Oy qui comprend un bras (51) en forme de rectangle aplati parallèle à Ox et, de part et d'autre du rectangle (51), une liaison déformable (55, 53) reliant le milieu de chaque longueur du rectangle aplati d'une part à la deuxième zone d'ancrage et d'autre part à l'ensemble mobile.

21. Gyromètre selon l'une des revendications 1 à 7, **caractérisé en ce que** le rectangle est un carré (300) et **en ce que** les diagonales du carré sont respectivement parallèles à Ox et Oy.

22. Gyromètre selon la revendication précédente, **caractérisé en ce que** les ensembles mobiles sont disposés de façon à ce que la direction d'excitation soit parallèle à Ox pour deux premiers éléments (50d, 50b) situés sur les sommets de la diagonale selon Ox et soit parallèle à Oy pour les deux premiers éléments (50a, 50c) situés sur les sommets de la diagonale selon Oy.

23. Gyromètre selon la revendication 21, **caractérisé en ce que** les ensembles mobiles sont disposés de façon à ce que la direction d'excitation soit parallèle à Oy pour deux premiers éléments (50d, 50b) situés sur les sommets de la diagonale selon Ox et soit parallèle à Ox pour les deux premiers éléments (50a, 50c) situés sur les sommets de la diagonale selon Oy.

24. Gyromètre selon l'une des revendications 21 à 23, **caractérisé en ce que** chaque premier élément mobile (50) soumis à un mouvement d'excitation est destiné à vibrer en opposition de phase avec le premier élément mobile situé sur le sommet opposé du carré et **en ce que** chaque deuxième élément mobile (30) soumis à un mouvement de détection est destiné à vibrer en opposition de phase avec le deuxième élément mobile (30) situé sur le sommet opposé du carré.

25. Gyromètre selon l'une des revendications 21 à 24, **caractérisé en ce qu'**il comporte un axe de symétrie A3 situé dans le plan de la plaque et orienté à ±45° par rapport à Ox, tel que les vibrations d'excitation des premiers éléments mobiles (50) de deux ensembles mobiles situés d'un côté de l'axe A3, sont symétriques par rapport aux vibrations d'excitation des premiers éléments mobiles (50) des deux autres ensembles mobiles situés de l'autre côté de cet axe A3.

26. Gyromètre selon l'une des revendications 21 à 25, **caractérisé en qu'**il comporte un axe de symétrie A4 situé dans le plan de la plaque et orienté à ±45° par rapport à Ox, tel que les vibrations de détection des seconds éléments mobiles (50) de deux ensembles mobiles situés d'un côté de l'axe A4, sont symétriques par rapport aux vibrations de détecttion des seconds éléments mobiles (50) des deux autres ensembles mobiles situés de l'autre côté de cet axe A4.

27. Gyromètre selon l'une des revendications 21 à 26, **caractérisé en ce que** la structure de couplage comprend un cinquième élément de raideur (6) situé au centre de la structure comportant les quatre ensembles mobiles (1a, 1b,1c,1d), et quatre liaisons rigides (63a, 63b, 63c, 63d) reliant chacune le cinquième élément de raideur (6) à l'un des quatre ensembles mobiles.

28. Gyromètre selon la revendication précédente, **caractérisé en ce que** le cinquième élément de raideur comprend un bras (61) en forme de croix de Malte ou de trèfle à quatre feuilles.

29. Gyromètre selon l'une des revendications 21 à 28, **caractérisé en ce que** chaque ensemble mobile est relié à une zone d'ancrage extérieure (26) par un sixième élément de raideur (7).

30. Gyromètre selon la revendication précédente, **caractérisé en ce que** le sixième élément de raideur (7) comprend un bras (71) en forme de triangle isocèle dont la base est parallèle au côté de l'ensemble mobile auquel il est relié et dont le sommet opposé à cette base pointe vers la zone d'ancrage (26), ce sommet présentant un créneau dirigé vers l'intérieur du triangle, et une barre de liaison rigide (73) qui relie le bras (71) à la zone d'ancrage (26).

## Claims

1. Gyrometer based on a vibrating structure, produced by micromachining in a thin planar wafer, comprising four moving assemblies (1a, 1b, 1c, 1d) placed at the vertices of a virtual rectangle, each moving assembly being coupled to two moving assemblies located at neighboring vertices via a coupling structure in order to allow transfer of mechanical vibration energy between them, each moving assembly comprising an inertial first moving element (50) intended to vibrate in two orthogonal directions in the plane of the wafer, namely a first direction, called the excitation direction, and a second direction, called the detection direction, a second moving element (30) intended to vibrate in the detection direction without permitting movement of the second element in the excitation direction and connected, on one side, to the first moving element (50), and, on the other side, to anchoring zones (34, 36) via linking means (40, 42, 44, 46, 52, 54, 56, 58) which allow transmission to the second moving element of the vibration movement of the first moving element in the detection direction, **characterized in that** the inertial first moving elements are connected to the coupling structure.

2. Gyrometer according to the preceding claim, **characterized in that** the first moving element (50) is a frame surrounding the second moving element (30) called the detection mass.

3. Gyrometer according to the preceding claim, **characterized in that** the frame (50) is rectangular.

4. Gyrometer according to either of Claims 2 and 3, **characterized in that** the detection mass (30) is connected to the frame (50) by at least two straight and elongate first flexure arms (52, 54, 56, 58) which have a high resistance to elongation in the detection direction and a low stiffness in the excitation direction, and the detection mass (30) is connected to at least one anchoring zone by at least two second narrow and elongate flexure arms (40, 42, 44, 46) which have a high resistance to elongation in the excitation direction and a low stiffness in the detection direction.

5. Gyrometer according to the preceding claim, **characterized in that** each first flexure arm is folded in the form of a U and has two elongate parts extending in the detection direction, these two parts being connected by a short linking element.

6. Gyrometer according to the preceding claim, **characterized in that** the short linking element of one of the first flexure arms (52) is connected to the similar linking element of another first arm (54) by a crossmember (60) elongate in the excitation direction.

7. Gyrometer according to one of the preceding claims, **characterized in that** each moving assembly is connected to at least one anchoring zone located toward the outside of the vibrating structure comprising the four moving assemblies via at least one stiffness element.

8. Gyrometer according to one of the preceding claims, **characterized in that** the sides of the rectangle are parallel to Ox and Oy respectively.

9. Gyrometer according to the preceding claim, **characterized in that** the excitation direction of each first moving element (50) is parallel to Ox.

10. Gyrometer according to the preceding claim, **characterized in that** each first moving element is intended to vibrate in phase opposition with the first elements located at the neighboring vertices of the virtual rectangle (200) and **characterized in that** each second moving element is intended to vibrate in phase opposition with the second elements located at the neighboring vertices of the virtual rectangle (200).

11. Gyrometer according to one of Claims 8 to 10, **characterized in that** it has an axis of symmetry A3 lying in the plane of the wafer and along Oy, such that the excitation vibrations of the first moving elements (50) of two moving assemblies that are located on one side of the axis A3 are symmetrical with respect to the excitation vibrations of the first moving elements (50) of the two other moving assemblies that are located on the other side of this axis A3.

12. Gyrometer according to one of Claims 8 to 11, **characterized in that** it has an axis of symmetry A4 lying in the plane of the wafer and along Ox, such that the detection vibrations of the second moving elements (50) of two moving assemblies that are located on one side of the axis A4 are symmetrical with respect to the detection vibrations of the second moving elements (50) of the two other moving assemblies that are located on the other side of this axis A4.

13. Gyrometer according to one of Claims 8 to 12, **characterized in that** it includes a pair of first stiffness elements (2) that can deform in directions parallel to Ox and Oy respectively, each first stiffness element (2) connecting, parallel to Ox, two moving assemblies (1a and 1b, or 1c and 1d) that are located at neighboring vertices of the virtual rectangle.

14. Gyrometer according to the preceding claim, **characterized in that** the first stiffness element (2) comprises two U-shaped arms (21), each arm (21) surrounding the inner side parallel to Oy of a moving assembly, it being connected to the moving assembly by short rigid links (64, 66) located at the ends of the U and being connected to the other arm (21) by at least one linking bar (22).

15. Gyrometer according to Claim 13, **characterized in that** the first stiffness element (2) comprises an arm (21) describing at least one crenel, each end of the arm (21) being connected to one of the two moving assemblies by a short rigid link (64).

16. Gyrometer according to one of Claims 8 to 15, **characterized in that** it includes a pair of second stiffness elements (3) that can deform in directions parallel to Ox and Oy respectively, each second stiffness element connecting, parallel to Oy, two moving assemblies (1a and 1d or 1b and 1c) that are located at neighboring vertices of the virtual rectangle.

17. Gyrometer according to the preceding claim, **characterized in that** the second stiffness element (3) comprises an arm (31) in the form of a rectangle flattened along Ox and able to deform in a direction parallel to Oy, which is located between the two moving assemblies and, on either side of the flattened rectangle (31), two links (33) that can deform in a direction parallel to Ox and that connect the middle of each length of the flattened rectangle (31) to the middle of one of the two moving assemblies.

18. Gyrometer according to Claim 16, **characterized in that** the second stiffness element (3) comprises an arm (31) in the form of a recumbent T and two short rigid links (67) each connecting the base of the T to one of the two moving assemblies.

19. Gyrometer according to one of Claims 8 to 18, **characterized in that** each moving assembly (1) is connected to a first outer anchoring zone (24) by a third stiffness element (4) that can deform in directions parallel to Ox and Oy respectively, comprising a U-shaped arm (41) which surrounds the outer side parallel to Oy of each moving assembly and which is connected to the moving assembly by short rigid links (43, 45) located at the ends of the U.

20. Gyrometer according to one of Claims 8 to 19, **characterized in that** each moving assembly is connected to a second outer anchoring zone (25) by a fourth stiffness element (5) that can deform in directions parallel to Ox and Oy respectively, which comprises an arm (51) in the form of a flattened rectangle parallel to Ox and, on either side of the rectangle (51), a deformable link (55, 53) connecting the middle of each length of the flattened rectangle, on the one hand, to the second anchoring zone, and on the other hand, to the moving assembly.

21. Gyrometer according to one of Claims 1 to 7, **characterized in that** the rectangle is a square (300) and **characterized in that** the diagonals of the square are parallel to Ox and Oy respectively.

22. Gyrometer according to the preceding claim, **characterized in that** the moving assemblies are arranged so that the excitation direction is parallel to Ox in the case of two first elements (50d, 50b) located at the vertices of the diagonal along Ox and is parallel to Oy in the case of the two first elements (50a, 50c) located at the vertices of the diagonal along Oy.

23. Gyrometer according to Claim 21, **characterized in that** the moving assemblies are placed so that the excitation direction is parallel to Oy in the case of two first elements (50d, 50b) located at the vertices of the diagonal along Ox and is parallel to Ox in the case of the two first elements (50a, 50c) located at the vertices of the diagonal along Oy.

24. Gyrometer according to one of Claims 21 to 23, **characterized in that** each first moving element (50) undergoing an excitation movement is intended to vibrate in phase opposition with the first moving element located at the opposite vertex of the square and **characterized in that** each second moving element (30) undergoing a detection movement is intended vibrate in phase opposition with the second moving element (30) located at the opposite vertex of the square.

25. Gyrometer according to one of Claims 21 to 24, **characterized in that** it has an axis of symmetry A3 lying in the plane of the wafer and oriented at ±45° with respect to Ox, such that the excitation vibrations of the first moving elements (50) of two moving assemblies that are located on one side of the axis A3 are symmetrical with respect to the excitation vibrations of the first moving elements (50) of the two other moving assemblies located on the other side of this axis A3.

26. Gyrometer according to one of Claims 21 to 25, **characterized in that** it has an axis of symmetry A4 lying in the plane of the wafer and oriented at ±45° with respect to Ox, such that the detection vibrations of the second moving elements (50) of two moving assemblies that are located on one side of the axis A4 are symmetrical with respect to the detection vibrations of the second moving elements (50) of the two other moving assemblies that are located on the other side of this axis A4.

27. Gyrometer according to one of Claims 21 to 26, **characterized in that** the coupling structure includes a fifth stiffness element (6) located at the center of the structure comprising the four moving assemblies (1a, 1b, 1c, 1d) and four rigid links (63a, 63b, 63c, 63d) each connecting the fifth stiffness element (6) to one of the four moving assemblies.

28. Gyrometer according to the preceding claim, **characterized in that** the fifth stiffness element comprises an arm (61) in the form of a Maltese cross or a four-leaf clover.

29. Gyrometer according to one of Claims 21 to 28, **characterized in that** each moving assembly is connected to an outer anchoring zone (26) by a sixth stiffness element (7).

30. Gyrometer according to the preceding claim, **characterized in that** the sixth stiffness element (7) comprises an arm (71) in the form of an isosceles triangle, the base of which is parallel to the side of the moving assembly to which it is connected and the vertex of which, on the opposite side to this base, points toward the anchoring zone (26), this vertex having a crenel directed toward the inside of the triangle, and a rigid linking bar (73) that connects the arm (71) to the anchoring zone (26).

## Patentansprüche

1. Gyrometer mit vibrierender Struktur, das durch Mikrobearbeitung in einer dünnen ebenen Platte hergestellt wird, mit vier beweglichen Einheiten (1a, 1b, 1c, 1d), die an den Ecken eines virtuellen Rechtecks angeordnet sind, wobei jede bewegliche Einheit von einer Kopplungsstruktur an zwei bewegliche Einheiten gekoppelt wird, die sich an benachbarten Ecken befinden, um einen Transfer mechanischer Vibrationsenergie zwischen ihnen zu ermöglichen, wobei jede bewegliche Einheit ein erstes bewegliches Trägheitselement (50), das dazu bestimmt ist, gemäß zwei orthogonalen Richtungen in der Ebene der Platte zu vibrieren, nämlich einer ersten, so genannten Anregungsrichtung und einer zweiten, so genannten Erfassungsrichtung, und ein zweites bewegliches Element (30) aufweist, das dazu bestimmt ist, gemäß der Erfassungsrichtung zu vibrieren, ohne eine Bewegung des zweiten Elements gemäß der Anregungsrichtung zu erlauben und einerseits mit dem ersten beweglichen Element (50) und andererseits mit Verankerungszonen (34, 36) über Verbindungsmittel (40, 42, 44, 46, 52, 54, 56, 58) verbunden ist, die die Übertragung der Vibrationsbewegung des ersten beweglichen Elements gemäß der Erfassungsrichtung auf das zweite bewegliche Element erlauben, **dadurch gekennzeichnet, dass** die ersten beweglichen Trägheitselemente mit der Kopplungsstruktur verbunden sind.

2. Gyrometer nach dem vorhergehenden Anspruch, **dadurch gekennzeichnet, dass** das erste bewegliche Element (50) ein Rahmen ist, der das zweite bewegliche Element (30) umgibt, das durch die Bezeichnung Erfassungsmasse bezeichnet ist.

3. Gyrometer nach dem vorhergehenden Anspruch, **dadurch gekennzeichnet, dass** der Rahmen (50) rechteckig ist.

4. Gyrometer nach einem der Ansprüche 2 oder 3, **dadurch gekennzeichnet, dass** die Erfassungsmasse (30) mit dem Rahmen (50) über mindestens zwei erste schmale und längliche Biegearme (52, 54, 56, 58) verbunden ist, die eine große Festigkeit gegenüber der Längung in der Erfassungsrichtung und eine geringe Steifigkeit in der Anregungsrichtung aufweisen, und die Erfassungsmasse (30) mit mindestens einer Verankerungszone über mindestens zwei zweite schmale und längliche Biegearme (40, 42, 44, 46) verbunden ist, die eine große Festigkeit gegenüber der Längung in Anregungsrichtung und eine geringe Steifigkeit in der Erfassungsrichtung aufweisen.

5. Gyrometer nach dem vorhergehenden Anspruch, **dadurch gekennzeichnet, dass** jeder erste Biegearm U-förmig umgebogen ist und zwei längliche Bereiche aufweist, die sich in der Erfassungsrichtung erstrecken, wobei diese zwei Bereiche durch ein kurzes Verbindungselement verbunden sind.

6. Gyrometer nach dem vorhergehenden Anspruch, **dadurch gekennzeichnet, dass** das kurze Verbindungselement eines der ersten Biegearme (52) mit dem gleichen Verbindungselement eines anderen ersten Arms (54) über eine Querstrebe (60} verbunden ist, die sich in der Anregungsrichtung erstreckt.

7. Gyrometer nach einem der vorhergehenden Ansprüche, **dadurch gekennzeichnet, dass** jede bewegliche Einheit mit mindestens einer außerhalb der die vier beweglichen Einheiten aufweisenden vibrierenden Struktur befindlichen Verankerungszone über mindestens ein Versteifungselement verbunden ist.

8. Gyrometer nach einem der vorhergehenden Ansprüche, **dadurch gekennzeichnet, dass** die Seiten des Rechtecks zu Ox bzw. Oy parallel sind.

9. Gyrometer nach dem vorhergehenden Anspruch, **dadurch gekennzeichnet, dass** die Anregungsrichtung jedes ersten beweglichen Elements (50) parallel zu Ox ist.

10. Gyrometer nach dem vorhergehenden Anspruch, **dadurch gekennzeichnet, dass** jedes erste bewegliche Element dazu bestimmt ist, in Gegenphase zu den ersten Elementen zu vibrieren, die sich an den benachbarten Ecken des virtuellen Rechtecks (200) befinden, und dass jedes zweite bewegliche Element dazu bestimmt ist, in Gegenphase zu den zweiten Elementen zu vibrieren, die sich an den benachbarten Ecken des virtuellen Rechtecks (200) befinden.

11. Gyrometer nach einem der Ansprüche 8 bis 10,
**dadurch gekennzeichnet, dass** es eine Symmetrieachse A3 aufweist, die sich in der Ebene der Platte und gemäß Oy befindet, derart, dass die Anregungsvibrationen der ersten beweglichen Elemente (50) von zwei beweglichen Einheiten, die sich auf einer Seite der Achse A3 befinden, symmetrisch bezüglich der Anregungsvibrationen der ersten beweglichen Elemente (50) der zwei anderen beweglichen Einheiten sind, die sich auf der anderen Seite dieser Achse A3 befinden.

12. Gyrometer nach einem der Ansprüche 8 bis 11, **dadurch gekennzeichnet, dass** es eine Symmetrieachse A4 aufweist, die sich in der Ebene der Platte und gemäß Ox befindet, derart, dass die Erfassungsvibrationen der zweiten beweglichen Elemente (50) von zwei beweglichen Einheiten, die sich auf einer Seite der Achse A4 befinden, symmetrisch bezüglich der Erfassungsvibrationen der zweiten beweglichen Elemente (50) der zwei anderen beweglichen Einheiten sind, die sich auf der anderen Seite dieser Achse A4 befinden.

13. Gyrometer nach einem der Ansprüche 8 bis 12, **dadurch gekennzeichnet, dass** es ein Paar von ersten Versteifungselementen (2) aufweist, die gemäß Richtungen parallel zu Ox bzw. Oy verformbar sind, wobei jedes erste Versteifungselement (2) parallel zu Ox zwei bewegliche Einheiten (1a und 1b oder 1c und 1d) verbindet, die sich an benachbarten Ecken des virtuellen Rechtecks befinden.

14. Gyrometer nach dem vorhergehenden Anspruch, **dadurch gekennzeichnet, dass** das erste Versteifungselement (2) zwei Arme (21) in Form eines U aufweist, wobei jeder Arm (21) die Innenseite parallel zu Oy einer beweglichen Einheit umgibt, mit der beweglichen Einheit über kurze steife Verbindungen (64, 66) verbunden ist, die sich an den Enden des U befinden, und mit dem anderen Arm (21) über mindestens eine Verbindungsstange (22) verbunden ist.

15. Gyrometer nach Anspruch 13, **dadurch gekennzeichnet, dass** das erste Versteifungselement (2) einen Arm (21) aufweist, der mindestens eine Mäanderform beschreibt, wobei jedes Ende des Arms (21) mit einer der zwei beweglichen Einheiten über eine kurze steife Verbindung (64) verbunden ist.

16. Gyrometer nach einem der Ansprüche 8 bis 15, **dadurch gekennzeichnet, dass** es ein Paar von zweiten Versteifungselementen (3) aufweist, die gemäß Richtungen parallel zu Ox bzw. Oy verformbar sind, wobei jedes zweite Versteifungselement parallel zu Oy zwei bewegliche Einheiten (1a und 1d oder 1b und 1c) verbindet, die sich an benachbarten Ecken des virtuellen Rechtecks befinden.

17. Gyrometer nach dem vorhergehenden Anspruch, **dadurch gekennzeichnet, dass** das zweite Versteifungselement (3) einen Arm (31) in Form eines gemäß Ox abgeflachten und in einer Richtung parallel zu Oy verformbaren Rechtecks, das sich zwischen den zwei beweglichen Einheiten befindet, und zu beiden Seiten des abgeflachten Rechtecks (31) zwei gemäß einer Richtung parallel zu Ox verformbare Verbindungen (33) aufweist, die die Mitte jeder Länge des abgeflachten Rechtecks (31) mit der Mitte einer der zwei beweglichen Einheiten verbinden.

18. Gyrometer nach Anspruch 16, **dadurch gekennzeichnet, dass** das zweite Versteifungselement (3) einen Arm (31) in Form eines liegenden T und zwei kurze steife Verbindungen (67) aufweist, die je die Basis des T mit einer der zwei beweglichen Einheiten verbinden.

19. Gyrometer nach einem der Ansprüche 8 bis 18, **dadurch gekennzeichnet, dass** jede bewegliche Einheit (1) mit einer ersten äußeren Verankerungszone (24) über ein drittes Versteifungselement (4) verbunden ist, das gemäß zu Ox bzw. Oy parallelen Richtungen verformbar ist und einen Arm (41) in Form eines U aufweist, der die Außenseite parallel zu Oy jeder beweglichen Einheit umgibt und der mit der beweglichen Einheit über kurze steife Verbindungen (43, 45) verbunden ist, die sich an den Enden des U befinden.

20. Gyrometer nach einem der Ansprüche 8 bis 19, **dadurch gekennzeichnet, dass** jede bewegliche Einheit mit einer zweiten äußeren Verankerungszone (25) über ein viertes Versteifungselement (5) verbunden ist, das gemäß zu Ox bzw. Oy parallelen Richtungen verformbar ist, das einen Arm (51) in Form eines abgeflachten Rechtecks parallel zu Ox und zu beiden Seiten des Rechtecks (51) eine verformbare Verbindung (55, 53) aufweist, die die Mitte jeder Länge des abgeflachten Rechtecks einerseits mit der zweiten Verankerungszone und andererseits mit der beweglichen Einheit verbindet.

21. Gyrometer nach einem der Ansprüche 1 bis 7, **dadurch gekennzeichnet, dass** das Rechteck ein Quadrat (300) ist, und dass die Diagonalen des Quadrats parallel zu Ox bzw. Oy sind.

22. Gyrometer nach dem vorhergehenden Anspruch, **dadurch gekennzeichnet, dass** die beweglichen Einheiten so angeordnet sind, dass die Anregungsrichtung für zwei erste Elemente (50d, 50b), die sich an den Spitzen der Diagonale gemäß Ox befinden, parallel zu Ox liegt, und für die zwei ersten Elemente (50a, 50c), die sich an den Spitzen der Diagonale gemäß Oy befinden, parallel zu Oy liegt.

23. Gyrometer nach Anspruch 21, **dadurch gekennzeichnet, dass** die beweglichen Einheiten so angeordnet sind, dass die Anregungsrichtung für zwei erste Elemente (50d, 50b), die sich an den Spitzen der Diagonale gemäß Ox befinden, parallel zu Oy liegt, und für die zwei ersten Elemente (50a, 50c), die sich an den Spitzen der Diagonale gemäß Oy befinden, parallel zu Ox liegt.

24. Gyrometer nach einem der Ansprüche 21 bis 23, **dadurch gekennzeichnet, dass** jedes erste bewegliche Element (50), das eine Anregungsbewegung erfährt, dazu bestimmt ist, in Gegenphase zu dem ersten beweglichen Element zu vibrieren, das sich an der gegenüberliegenden Spitze des Quadrats befindet, und dass jedes zweite bewegliche Element (30), das eine Erfassungsbewegung erfährt, dazu bestimmt ist, in Gegenphase zum zweiten beweglichen Element (30) zu vibrieren, das sich an der gegenüberliegenden Spitze des Quadrats befindet.

25. Gyrometer nach einem der Ansprüche 21 bis 24, **dadurch gekennzeichnet, dass** es eine Symmetrieachse A3 aufweist, die sich in der Ebene der Platte befindet und mit einem Winkel von ± 45° bezüglich Ox ausgerichtet ist, derart, dass die Anregungsvibrationen der ersten beweglichen Elemente (50) von zwei beweglichen Einheiten, die sich auf einer Seite der Achse A3 befinden, bezüglich der Anregungsvibrationen der ersten beweglichen Elemente (50) der zwei anderen beweglichen Einheiten symmetrisch sind, die sich auf der anderen Seite dieser Achse A3 befinden.

26. Gyrometer nach einem der Ansprüche 21 bis 25, **dadurch gekennzeichnet, dass** es eine Symmetrieachse A4 aufweist, die sich in der Ebene der Platte befindet und mit einem Winkel von ± 45° bezüglich Ox ausgerichtet ist, derart, dass die Erfassungsvibrationen der zweiten beweglichen Elemente (50) von zwei beweglichen Einheiten, die sich auf einer Seite der Achse A4 befinden, bezüglich der Erfassungsvibrationen der zweiten beweglichen Elemente (50) der zwei anderen beweglichen Einheiten symmetrisch sind, die sich auf der anderen Seite dieser Achse A4 befinden.

27. Gyrometer nach einem der Ansprüche 21 bis 26, **dadurch gekennzeichnet, dass** die Kopplungsstruktur ein fünftes Versteifungselement (6), das sich in der Mitte der Struktur befindet, die die vier beweglichen Einheiten (1a, 1b, 1c, 1d) enthält, und vier steife Verbindungen (63a, 63b, 63c, 63d) aufweist, die je das fünfte Versteifungselement (6) mit einer der vier beweglichen Einheiten verbinden.

28. Gyrometer nach dem vorhergehenden Anspruch, **dadurch gekennzeichnet, dass** das fünfte Versteifungselement einen Arm (61) in Form eines Malteserkreuzes oder eines vierblättrigen Kleeblatts aufweist.

29. Gyrometer nach einem der Ansprüche 21 bis 28, **dadurch gekennzeichnet, dass** jede bewegliche Einheit über ein sechstes Versteifungselement (7) mit einer äußeren Verankerungszone (26) verbunden ist.

30. Gyrometer nach dem vorhergehenden Anspruch, **dadurch gekennzeichnet, dass** das sechste Versteifungselement (7) einen Arm (71) in Form eines gleichschenkligen Dreiecks, dessen Basis parallel zu der Seite der beweglichen Einheit liegt, mit der es verbunden ist, und dessen dieser Basis entgegengesetzte Spitze zur Verankerungszone (26) weist, wobei diese Spitze eine zur Innenseite des Dreiecks gerichtete Mäanderform hat, und eine steife Verbindungsstange (73) aufweist, die den Arm (71) mit der Verankerungszone (26) verbindet.
